# EUROPEAN PATENT SPECIFICATION

(11) **EP 1 255 311 B1**
(45) Date of publication and mention of the grant of the patent: **19.01.2011**
(21) Application number: 02009171.6
(22) Date of filing: 24.04.2002
(51) Int. Cl.: H01M 10/0525

(54) **Cathode active material and non-aqueous electrolyte cell**
Kathoden-Aktivmaterial und Zelle mit nicht-wässerigem Elektrolyt
Materiau actif cathodique et cellule à électrolyte non-aqueux

(30) Priority: 25.04.2001 JP 2001128195; 28.02.2002 JP 2002054508
(43) Date of publication of application: 06.11.2002
(73) Proprietor: Sony Corporation, Tokyo 141 (JP)
(72) Inventor: Anzai, Masanori, Sony Fukushima Corporation, Koriyama-shi, Fukushima (JP)
(74) Representative: Müller - Hoffmann & Partner

(56) References cited:
- DE-A1- 19 849 343
- JP-A- 11 307 094
- DATABASE WPI Section Ch, Week 199643 Derwent Publications Ltd., London, GB; Class L03, AN 1996-430246 XP002324020 & JP 08 213015 A (SONY CORP) 20 August 1996 (1996-08-20)
- PATENT ABSTRACTS OF JAPAN vol. 2000, no. 12, 3 January 2001 (2001-01-03) & JP 2000 251892 A (TOYOTA CENTRAL RES & DEV LAB INC), 14 September 2000 (2000-09-14)
- PATENT ABSTRACTS OF JAPAN vol. 1999, no. 05, 31 May 1999 (1999-05-31) & JP 11 054120 A (JAPAN STORAGE BATTERY CO LTD), 26 February 1999 (1999-02-26)
- PATENT ABSTRACTS OF JAPAN vol. 2000, no. 06, 22 September 2000 (2000-09-22) & JP 2000 077071 A (NEC CORP), 14 March 2000 (2000-03-14)
- PATENT ABSTRACTS OF JAPAN vol. 1995, no. 01, 28 February 1995 (1995-02-28) & JP 06 283174 A (MATSUSHITA ELECTRIC IND CO LTD), 7 October 1994 (1994-10-07)
- PATENT ABSTRACTS OF JAPAN vol. 2000, no. 03, 30 March 2000 (2000-03-30) & JP 11 345615 A (FUJI PHOTO FILM CO LTD), 14 December 1999 (1999-12-14)

## Description

### BACKGROUND OF THE INVENTION

### Field of the Invention

This invention relates to a cathode active material containing a metal lithium nickel composite oxide and a lithium manganese composite oxide and to a non-aqueous electrolyte cell containing this cathode active material.

### Description of Related Art

In keeping pace with the progress in the electronic technology in recent years, there is a pronounced tendency towards higher performance, reduction in size and portability of the electronic equipment, such that a demand is raised for a secondary cell having a high energy density as a driving power supply for these electronic equipment. In these electronic equipment, a nickel-cadmium secondary cell, a lead cell, a nickel hydrogen cell and a non-aqueous electrolyte cell, exploiting the lithium doping/undoping reactions, or so-called lithium secondary cell, are used.

Of these secondary batteries, the lithium secondary cell has a merit that it has high cell voltage, a high energy density, only little self-discharge and superior cyclic characteristics.

Currently, lithium cobalt composite oxides, having high discharge potential and high energy density, are predominantly used as a cathode active material for a lithium secondary cell. However, cobalt, as a starting material, is scanty as natural resources arid are not stable in supply in future. For this reason, it has been proposed to use, as a cathode active material, a lithium/nickel composite oxide or a nickel manganese composite oxide, employing nickel and manganese and which are more inexpensive and abundant as natural resources.

With the lithium secondary batteries, containing the lithium nickel composite oxide as the cathode active material, not only LiNiO₂, but also a lithium nickel composite oxide, in which the proportion of lithium is slightly made higher by slightly changing the lithium nickel molar ratio, or a lithium nickel composite oxide, in which metal elements other than lithium and nickel are solid-dissolved in crystal structure, are used as a cathode active material to increase the cell capacity.

However, the capacity of the lithium secondary cell cannot be raised beyond a certain limit even if a lithium nickel composite oxide having a larger proportion of lithium is used as a cathode active material. Thus, it is demanded of the non-aqueous electrolyte cell, employing a lithium nickel composite oxide, to raise not only its capacity but also its cyclic characteristics. However, with the conventional lithium nickel composite oxides, such as lithium nickel composite oxides, in which the proportion of lithium in their composition is larger, it has been difficult to achieve higher cyclic characteristics and higher cell capacity.

DE 19849343 A1 describes a preparation method of a lithium composite oxide and a lithium ion secondary cell adopting said lithium composite oxide as an active material of a positive electrode. The lithium composite oxide is represented by the general formula LiₐNi_{(1-x-y)}CoₓM_{y}O₂, wherein M is at least one metal atom of A1, Ca, Mg and/or B, a = 0.97 to 1.05; x = 0.1 to 0.3 and y = 0 to 0.05.

JP 11-307094 A discloses a positive electrode active material for a lithium secondary battery having a composition , expressed by Li₁₋ₐNi_{1-b-c-d}Mn_{b}Co_{c}M_{d}O₂, wherein -0.15 ≤ a ≤ 0.10, 0.02 ≤ b ≤ 0.45, 0 ≤ c ≤ 0.50 and 0 ≤ d ≤ 0.20. In the formula. M is one or more kinds of elements selected from among the group Ia excluding hydrogen and lithium, group IIa, group IIb, group IIIb, and group IVb in the periodic table of elements, and a group comprising transition elements excluding Ni, Co, and Mn.

JP 2000251892 A provides a positive electrode active material for a lithium secondary battery formed by mixing and crushing a lithium-nickel composite oxide expressed by formula I (LiNi₁₋ₓM1ₓO₂, 0 < x < 0.3) and a lithium-manganese composite oxide expressed by formula II (LiMn_{2-y}M2_{y}O₂, 0 < y < 0.3) by the use of a ball mill or the like. In the formulas, M1 and M2 are one or more kinds of metal elements within A1. B, alkaline metal, alkaline earth metal and transition metal. When the mixture is of 100 wt.%, the content of the lithium-nickel composite oxide is preferably 10-80 wt.%.

### SUMMARY OF THE INVENTION

It is therefore an object of the present invention to provide a cathode active material which achieves a high cell capacity and superior cyclic characteristics which were not possible to achieve with the conventional lithium nickel composite oxides. It is another object of the present invention to provide a non-aqueous electrolyte cell having a high capacity and superior cyclic characteristics.

For accomplishing the above objects, the present inventors have conducted eager researches, and have found that, if a lithium nickel composite oxide, in which the lithium to nickel molar ratio is slightly changed so that the proportion of lithium in the composition is made smaller than that in the case of the conventional lithium nickel composite oxide, is used as a cathode active material, it is possible to realize a non-aqueous electrolyte cell having cell characteristics that could not be achieved with the use as the cathode active material of the conventional lithium nickel composite oxide having a higher lithium ratio in its composition.

The cathode active material according to the present invention has been completed based on the above-described information, and resides in cathode active material containing a lithium nickel composite oxide represented by the general formula Li_{A}Ni_{1-z}M_{z}O₂ where A is such that 0.95 ≤ A < 1, Z is such that 0.01 ≤ Z ≤ 0.5 and M is at least one of Fe, Co, Mn, Cu, Zn, Al, Sn, B, Ga, Cr, V, Ti, Mg, Ca and Srₓ and a lithium manganese composite oxide, wherein said lithium manganese composite oxide is a compound represented by the general formula Li_{X}Mn_{2-Y}M'_{Y}O₄, where X is such that 0.9 ≤ X, Y is such that 0.01 ≤ Y < 0.5 and M' is at least one of Fe, Co, Ni, Cu, Zn, Al, Sn, Cr, V, Ti, Mg, Ca and Sr.

By employing the lithium nickel composite oxide, represented by the general formula Li_{A}Ni_{1-Z}M_{Z}O₂, such a non-aqueous electrolyte cell may be realized which is of high capacity and which is superior in cyclic characteristics.

For accomplishing the above objects, the present inventors have conducted eager researches, and have also found that, by employing, as a cathode active material in a non-aqueous electrolyte cell, a lithium nickel composite oxide, in which the lithium/nickel molar ratio in the conventional lithium nickel composite oxide is slightly changed so that the proportion of lithium is smaller, there may be provided a non-aqueous electrolyte cell having cell characteristics not achieved with the use as the cathode active material of the conventional lithium nickel composite oxide with a larger proportion of lithium.

The non-aqueous electrolyte cell according to the present invention has been completed based on the above-described information, and resides in a non-aqueous electrolyte cell including a cathode containing a positive active material, an anode containing an anode/negative active material, and a non-aqueous electrolyte, wherein a cathode/positive active material contains a lithium nickel composite oxide represented by the general formula Li_{A}Ni_{1-Z}M_{Z}O₂, where A is such that 0.95 ≤ A < 1, Z is such that 0.01 ≤ Z ≤ 0.5 and M is at least one of Fe, Co, Mn, Cu, Zn, Al, Sn, B, Ga, Cr, V, Ti, Mg, Ca and Sr, and a lithium manganese composite oxide, wherein said lithium manganese composite oxide is a compound represented by the general formula Li_{X}Mn_{2-Y}M'_{Y}O₄, where X is such that 0.9 ≤ X, Y is such that 0.01 ≤ Y < 0.5 and M' is at least one of Fe, Co, Ni, Cu, Zn, Al, Sn, Cr, V, Ti, Mg, Ca and Sr.

The non-aqueous electrolyte cell according to the present invention, containing a lithium nickel composite oxide represented by the general formula Li_{A}Ni_{1-Z}M_{Z}O₂, as cathode/positive active material, has a high capacity and superior cyclic characteristics. That is, the cathode/positive active material of the present invention gives a non-aqueous electrolyte cell having a high capacity and superior cyclic characteristics.

Moreover, the non-aqueous electrolyte cell according to the present invention is more excellent in cyclic characteristics and higher in capacity than the conventional non-aqueous electrolyte cell containing a lithium nickel composite oxide having a larger proportion of lithium.

### BRIEF DESCRIPTION OF THE DRAWINGS

Fig.1 is a cross-sectional view showing an illustrative structure of a square-shaped non-aqueous electrolyte secondary cell.
Fig.2 is a cross-sectional view showing an illustrative structure of the non-aqueous electrolyte secondary cell shown in Fig.1.

### DESCRIPTION OF THE PREFERRED EMBODIMENTS

Referring to the drawings, preferred embodiments of the present invention will be explained in detail.

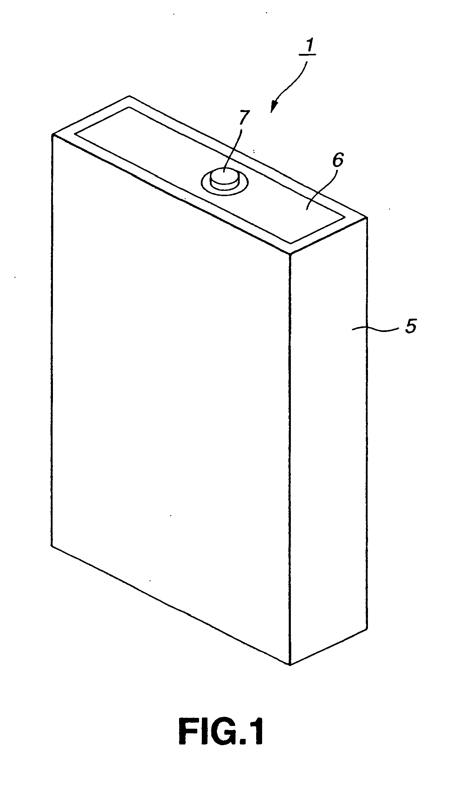

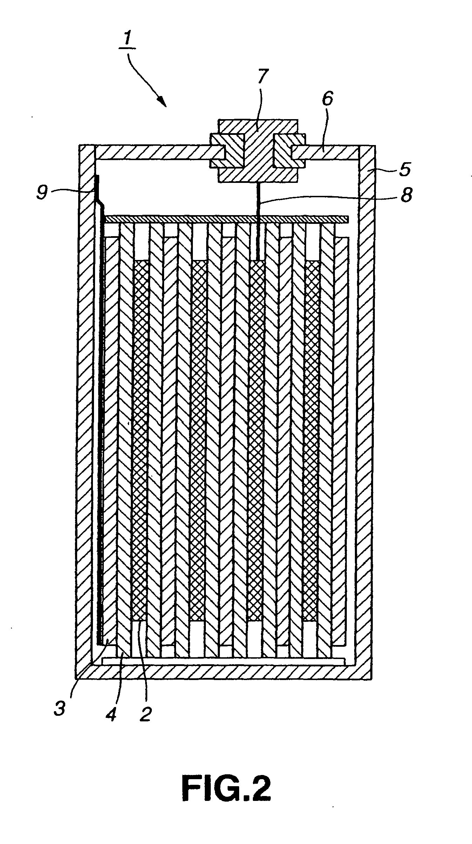

A non-aqueous electrolyte secondary cell 1, embodying the present invention, is a so-called lithium ion secondary cell, and is comprised of an elliptically-shaped cell unit, housed in a cell can 5 as shown in Figs. 1 and 2. The cell unit is comprised of a band-shaped cathode 2 and a band-shaped anode 3, laminated together with a separator 4 in-between, and which are coiled together in the longitudinal direction. A non-aqueous electrolyte liquid is injected int the cell can 5. The opening end of the cell can 5 is sealed with a cell lid 6.

A terminal pin 7 is connected to a cathode lead 8 led out from the cathode 2, while the cell can 5 is connected to an anode lead 9 led out from the anode 3. Thus, in the non-aqueous electrolyte secondary cell 1, the cell can 5 and the terminal pin 7 operate as an anode terminal and as a cathode terminal, respectively.

The cathode 2 is comprised of a layer of a cathode/positive active material, formed on a cathode current collector. The layer of the cathode/positive active material is formed by coating a cathode mixture, containing a cathode/positive active material, on a cathode current collector, and drying the resulting mass in situ.

The cathode 2 in the non-aqueous electrolyte secondary cell 1 contains, as a cathode active material, a lithium nickel composite oxide represented by the general formula L1i_{A}Ni_{1-Z}M_{Z}O₂, where A is such that 0.95 ≤ A ≤ 1, Z is such that 0.01 ≤ Z ≤ 0.5 and M is at least one selected from the group consisting of Fe, Co, Mn, Cu, Zn, Al, Sn, B, Ga, Cr, V, Ti, Mg, Ca and Sr.

When a lithium nickel composite oxide is used as a cathode/positive active material a lithium nickel composite oxide, having a larger proportion for lithium, such as a compound represented by the general formula Li_{A}Ni_{1-Z}M_{Z}O₂, where A is 1 or more, has so far been used. However, with the non-aqueous electrolyte secondary cell, containing, as the cathode/positive active material a lithium nickel composite oxide, having a higher proportion for lithium, a demand has been raised for improving cyclic characteristics, even though the cell has practically satisfactory cell capacity.

The present inventors have conducted eager searches and have arrived at the information that, by using, as a cathode/positive active material, a lithium nickel composite oxide having smaller lithium contents by slightly changing the lithium to nickel molar ratio, that is Li_{A}Ni_{1-Z}M_{Z}O₂, where 0.95 ≤ A < 1, such a non-aqueous electrolyte secondary cell 1 may be produced having cell characteristics not achievable with the use as the cathode/positive active material of the conventional lithium nickel composite oxide having a larger proportion for lithium.

The non-aqueous electrolyte secondary cell 1, containing Li_{A}Ni_{1-Z}M_{Z}O₂, where 0.95 ≤ A < 1, as the cathode/positive active material, is of a high capacity, and is superior in cyclic characteristics. It is noted that, although the range of A is optionally selected within the above range, the above range of 0.95 ≤ A < 1 is more appropriate in the perspective of raising the capacity of the non-aqueous electrolyte secondary cell 1.

It is noted that Li_{A}Ni_{1-Z}M_{Z}O₂, where 0.95 ≤ A < 1, may be obtained by using, as a starting material, carbonates, nitrates, oxides or hydroxides of lithium, nickel and M in the above formula, mixing these in amounts corresponding to the composition, specifically, so that a carbonate, a nitrate, an oxide or a hydroxide, for example, of lithium, is contained in the composition in a molar ratio of not less than 0.95 and less than 1, and on sintering the resulting mixture in a temperature range from 600° to 900°C.

As a cathode/positive active material used in combination with Li_{A}Ni_{1-Z}M_{Z}O₂, where 0.95 ≤ A < 1, lithium manganese composite oxides, specifically the compounds represented by the general formula Li_{X}Mn_{2-Y}M'_{Y}O₄, where X is such that 0.9 ≤ X, Y is such that 0.01 ≤ Y ≤ 0.5 and M' is at least one of Fe, Co, Ni, Cu, Zn,Al, Sn, Cr, V, Ti, Mg, Ca and Sr, is used.

In particular, the non-aqueous electrolyte secondary cell 1, employing a lithium nickel composite oxide, represented by the general formula Li_{A}Ni_{1-Z}M_{Z}O₂, where 0.95 ≤ A < 1, and the compound represented by the general formula Li_{X}Mn_{2-Y}M'_{Y}O₄, in combination, is not only of a high capacity, but also is further improved in cyclic characteristics and superior in safety.

In particular, in order to synthesize Li_{A}Ni_{1-X}M_{Z}O₂ of high capacity and superior thermal stability, as a lithium nickel composite compound Li_{A}Ni_{1-X}M_{Z}O₂ as the aforementioned compound, a co-precipitated nickel cobalt hydroxide is first prepared. Specifically, a compound of nickel or cobalt of nitric acid or sulfuric acid, soluble in an aqueous solution, or a chloride of nickel or cobalt, are co-precipitated by a reaction of neutralization, using, for example, a basic solution of alkali metals.

This co-precipitated hydroxide is obtained by dissolving e.g., nickel sulfate and cobalt sulfate at a preset ratio and mixing a solution of sodium hydroxide in the resulting solution.

This co-precipitated hydroxide is then dried and added to with an aluminum compound at a preset ratio. The resulting product then is stirred and mixed together. To the resulting mixture, lithium hydroxide is added at a preset ratio, stirred and mixed together to yield a precursor of Li_{A}Ni_{1-B-Z}Co_{B}Al_{Z}O₂.

As an aluminum compound, such a compound having an average particle size of 10 µm or less is preferred. By setting the average particle size to 10 µm or less, aluminum can be sufficiently solid-dissolved in the subsequent sintering step to assure optimum reactivity. When the average particle size exceeds 10 µm, solid dissolution of aluminum is insufficient such that impurities are produced along with Li_{A}Ni_{1-B-Z}Co_{B}Al_{Z}O₂. Specified examples of aluminum compounds may include aluminum hydroxide, aluminum oxide (alumina), aluminum nitrate, aluminum sulfate, and aluminum chloride. However, in consideration that decomposed gases may be evolved during sintering, aluminum hydroxide or aluminum oxide is preferably used as an aluminum compound. In particular, by using aluminum oxide with an extremely small average particle size, as the aluminum compound, Li_{A}Ni_{1-B-Z}Co_{B}Al_{Z}O₂ of superior quality may be produced.

Although the mixing ratio of the lithium nickel composite oxide, represented by the general formula Li_{A}Ni_{1-Z}M_{Z}O₂, and the lithium manganese composite oxide, may be selected arbitrarily, it is desirable that these compounds are mixed together at a weight ratio of 20:80 to 80:20. By setting the mixing ratio to the above range, it is possible to realize the non-aqueous electrolyte secondary cell 1 having optimum cyclic characteristics and a high capacity. If the mixing ratio of the lithium nickel composite oxide and the lithium manganese composite oxide exceeds the above range, the cell capacity tends to be lowered.

As the cathode current collector, a metal foil, such as an aluminum foil, is used. As the binder, any suitable known binder routinely used as the cathode/positive active material for this sort of the cell may be used. The cathode mixture may be admixed with known additives, such as electrically conductive materials.

The anode 3 is obtained on coating an anode mixture, containing an anode/negative active material, on an anode current collector, and drying the anode mixture in situ to form the layer of the anode/negative active material on the anode current collector.

As the anode/negative active material, carbon materials, for example, are used. As the carbon materials, those capable of doping/undoping lithium may be used. For example, low crystalline carbon materials, obtained on firing at a temperature at a lower temperature not higher than 2000°C, or high crystalline carbon materials, such as artificial graphite or natural graphite, and processed at an elevated temperature close to 3000°C, may be used. Specifically, pyrocarbon, cokes, graphite, vitreous carbon, sintered organic polymer compounds, that is furan resins sintered and carbonized at suitable temperatures, carbon fibers and activated charcoals, may be used.

For example, graphite powders of spherical, flat or fiber-like shape, having the spacing of the (002) plane being 0.335 to 0.340 nm and the c-axis spacing Lc being not less than 20 nm, may be used.

The anode capacity depends not only on the surface electron structure of graphite particles, but also on its crystallinity. In the present embodiment, as the index for crystallinity of the graphite material, the spacing of the (002) crystal plane is prescribed to be not larger than 0.3363 nm. The spacing of the (002) plane is more preferably 0.3360 nm or less and most preferably 0.3358 nm or less.

In the present embodiment, in which, as an index for crystallinity of the graphite material, the spacing of the (002) plane is prescribed to be 0.3363 nm or less, the irreversible capacity is appreciably reduced, while a high reversible capacity is obtained, in the anode formed of this graphite material of high crystallinity.

In addition, metals or semiconductors, capable of being alloyed or of forming a compounds with lithium, may be used. Examples of metal or semiconductor elements capable of forming alloys or compounds with lithium include preferably metal or semiconductor elements of the group 4B, more preferably silicon or tin, most preferably silicon. Also preferred are these alloys or compounds of lithium, specifically, SiB₄, SiB₆, Me₂Si, Mg₂Sn, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂ or ZnSi₂.

As the anode current collector, metal foils, such as copper foils, may be used. In the anode mixture may be contained any suitable known binders etc. Meanwhile, the anode mixture may be admixed with any suitable known additives as necessary.

As the separator 4, a micro-porous polypropylene film, for example, may be used.

The cell can 5 and the cell lid 6 may be formed of, for example, iron or aluminum. If the cell can 5 and the cell lid 6 of aluminum are used, it is necessary to weld the cathode lead 8 to the cell can 5 and to connect the anode lead 9 to the terminal pin 7 to prevent reaction of lithium with aluminum.

The non-aqueous electrolyte liquid is the electrolyte salt dissolved in a non-aqueous solvent.

As the organic solvent, cyclic carbonates, such as ethylene carbonates and propylene carbonates, non-cyclic carbonates, such as dimethyl carbonates and diethyl carbonates, cyclic esters, such as γ-butyrolactone or γ-valerolactone, non-cyclic esters, such as ethyl acetate or methyl propionate, and ethers, such as tetrahydrofuran or 1, 2-dimethoxyethane, may be used. One of these organic solvents may be used singly, or two or more of them may be used as a mixture.

There is no particular limitation to the electrolyte salts used provided that these are lithium salts dissolved in organic solvents and exhibit ionic conductivity in this state. For example, LiPF₆, LiBF₄, LiClO₄, LiCF₃SO₃, LiN(CF₃SO₂)₂ or LiC(CF₃SO₂)₃ may be used. One of these electrolyte salts may be used singly, or two or more of them may be used as a mixture.

As compared to the conventional non-aqueous electrolyte secondary cells containing, as the cathode/positive active materials, lithium nickel composite oxides having a higher proportion for lithium, that is Li_{A}Ni_{1-Z}M_{Z}O₂ where A is not less than 1, the non-aqueous electrolyte secondary cell 1, constructed as described above, is of high capacity and improved in cyclic characteristics.

Although the non-aqueous electrolyte secondary cell 1, employing a non-aqueous liquid electrolyte, as the electrolyte, has been explained in the foregoing, the present invention is not limited thereto, such that it may be applied to a non-aqueous electrolyte cell employing a solid electrolyte comprised of an electrolyte salt dissolved in a high molecular or polymer material or a gel electrolyte in which a solution obtained on dissolving an electrolyte salt in a non-aqueous solvent is held in a polymer matrix, or a so-called solid electrolyte cell.

When the present invention is applied to a solid electrolyte cell, the cathode and the anode are constructed similarly to the cathode 2 and the anode 3 of the non-aqueous electrolyte secondary cell 1 described above.

As the high molecular or polymer materials that make up the solid electrolyte or the gel electrolyte, silicon gel, acryl gel, acrylonitrile gel, polyphosphasen modified polymer, polyethylene oxide, polypropylene oxide, and cross-linked or modified composite polymers thereof, may be used. As fluorine-based polymers, poly(vinylidene fluoride, poly(vinylidene fluoride -CO- hexafluoropropylene), poly(vinylidene fluoride -CO- tetrafluoroethylene), poly(vinylidene fluoride -CO- trifluoroethylene) and mixtures thereof may be used.

When the solid electrolyte or the gel electrolyte is used as the non-aqueous electrolyte, a separator does not necessarily have to be provided, since the solid electrolyte or the gel electrolyte may perform the role of the separator.

### Examples

The non-aqueous electrolyte cell of the present invention will now be explained in detail based on concrete experimental results.

### Example 1

### [Method for producing lithium nickel composite oxides]

To 0.80 mol of nickel hydroxide, 0.15 mol of cobalt hydroxide and 0.05 mol of aluminum atoms was added 0.90 mol of lithium hydroxide to form a mixture of a precursor of LiₐNi_{0.8}Co_{0.15}Al_{0.05}O₂. This mixture was fired for five hours at 789°C in an oxygen atmosphere to yield Li_{0.95}Ni_{0.80}Co_{0.15}Al_{0.05}O₂ as a lithium nickel composite oxide. This compound was checked as to its diffraction peak by an X-ray diffraction method (Cukα rays). As a result, the compound was found to be a compound having a diffraction peak approximately coincident with LiNiO₂ registered in ICPDS. The so produced lithium nickel compound oxide was pulverized to an average particle size of 10 µm. The average particle size was measured similarly by a laser diffraction method.

### [Method for preparing lithium manganese composite oxide]

First, lithium carbonate (Li₂Co₃), manganese dioxide (MnO₂) and dichromium trioxide (Cr₂O₃) were mixed together at a preset ratio and fired in air at 850°C for five hours to produce a manganese-containing oxide LiMn_{2-V}Cr_{Y}O₄ containing lithium, manganese and a first element Ma (chromium). The value of V for chromium was set to 0.15. The so produced compound was searched by a X-ray diffraction method (X-ray tube Cukα), and was found to be a compound exhibiting a diffraction peak approximately coincident with that of a spinel type lithium manganese composite oxide as compared to LCPDS. The so produced manganese-containing oxide was pulverized to an average particle size of 20 µm by a laser diffraction method.

### [Method for producing a cathode]

37 weight parts of a lithium manganese composite oxide (LiMn)_{1.85}Cr_{0.15}O₄) and 55 weight parts of lithium nickel composite oxide (Li_{0.95}Ni_{0.80}Co_{0.15}Al_{0.05}O₂), as cathode/positive active material, 5 weight parts of graphite, as an electrically conductive agent and 3 weight parts of polyvinylidene fluoride (PVDF) as a binder, were mixed together and dispersed in polyvinylidene fluoride (NMP) to form a slurried cathode mixture.

This cathode mixture was coated on both surfaces of an aluminum foil, 20 µm thick, which is to operate as a cathode current collector. The resulting product was dried in situ and molded under compression. The resulting molded product was cut to preset size to prepare a cathode.

### [Method for producing an anode]

First, to 100 weight parts of coal-based coke, as a filler, 30 weight parts of coal tar based pitch as a binder were added and mixed together. The resulting mixture was compression-molded by a press and heat-treated at a temperature 1000°C or less to prepare a carbon molded product. This carbon molded product was impregnated with coal tar based pitch, melted at a temperature of 200°C or less, and the resulting product was then heat-treated at a temperature 1000°C or less. This sequence of operations was repeated several times. The resulting product was heat-treated at 2700°C to form a graphized molded product. Subsequently, the graphized molded product was crushed and classified to form powders.

The so produced graphized powders were analyzed as to structure by the X-ray diffraction method. The spacing of the (002) plane was 0.337 nm and the crystallite thickness along the c-axis was 50.0 nm. Moreover, the true density as found by the picnometric method was 2.23 g/cm3, the bulk density was 0.83 g/cm3, the specific surface area as found by the BET (Brunauer Emmen Teller) method was 4.4 m²/g. As for the grain size distribution, as found by the laser diffraction method, the average grain size was 31.2 µm, while the cumulative 10% grain size, cumulative 50% grain size and the cumulative 90% grain size were 12.3 µm, 29.5 µm and 53.7 µm, respectively.

92 weight parts of graphite, as an anode/negative active material, and 8 weight parts of polyvinylidene fluoride (PVDF), as a binder, were mixed together and dispersed in N-methyl pyrrolidone (NMP) to prepare a slurried anode mixture.

This anode mixture was coated on both sides of a copper foil, 15 µm in thickness, which is to operate as an anode current collector. The resulting product was dried in situ and molded under compression. The resulting molded product was cut to preset size to prepare an anode.

### [Method for preparing a non-aqueous liquid electrolyte]

In a solution obtained on mixing ethylene carbonate and dimethyl carbonate at a weight ratio of 1:1, LiPF₆ as an electrolyte salt was dissolved at a rate of 1 mol/l to prepare a non-aqueous liquid electrolyte.

### [Method for assembling a cell]

The cathode and the anode, prepared as described above, were layered together, with the interposition of a separator, 25 µm in thickness, and coiled longitudinally to prepare an elliptically-shaped cell unit.

This elliptically-shaped cell unit was inserted into a square-shaped cell can which is 29 mm in width, 6 mm in thickness and 67 mm in height. After the cell lid was welded to the opening part of the cell can, the non-aqueous liquid electrolyte was introduced via a liquid electrolyte injection port, provided in the cell lid. The liquid electrolyte injection port then was hermetically sealed. The above completed the square-shaped non-aqueous electrolyte secondary cell.

### Examples 2 to 4 and Comparative Examples 1 to 3

A non-aqueous electrolyte secondary cell was prepared in the same way as in Example 1, except that, in preparing a lithium nickel composite oxide, the mixing molar ratio of lithium hydroxide was set as shown in Table 1.

The initial charging was carried out on the cells of Examples 1 to 4 and Comparative Examples 1 to 3, prepared as described above. First, with the constant current of 400 mA, constant current constant voltage charging was carried out up to an upper limit voltage of 4.20 V, with the constant current being 400 mA, and constant current discharging at 1000 mA was carried out up to the terminal voltage of 3.00 V, in order to measure the initial voltage. Meanwhile, the initial cell capacity used was a of a value obtained on averaging over five cells.

For the respective cells, charging for the second time and so on were carried out for 2.5 hours, with the constant current of 1000 mA, up to the upper terminal voltage of 4.20 V. The constant current discharging of 1000 mA was then carried out up to the terminal voltage of 3.00 V. This charging/discharging cycle was repeated 300 times and measurement was made of the discharge capacity of the number 300 cycle. The ratio of the discharge capacity at the number 300 cycle to the initial discharge capacity was found and used as a capacity upkeep ratio (unit: %). The cyclic characteristics were evaluated from the capacity upkeep ratio after 300 cycles.

The results of the above measurements are also shown in Table 1 along with the mixing molar ratio (a) of lithium hydroxide in the preparation of the lithium nickel composite oxide and the compositions of the produced lithium nickel composite oxides.

**Table 1**

| | LiOH ratio | lithium nickel composite oxides | initial discharge capacity (mAh) | volume upkeep ratio (%) |
|---|---|---|---|---|
| Ex. 1 | 0.95 | Li_{0.97}N_{0.80}Co_{0.15}Al_{0.05}O₂ | 893 | 92 |
| Ex.2 | 0.97 | Li_{0.97}N_{0.80}Co_{0.15}Al_{0.05}O₂ | 963 | 90 |
| Ex.3 | 0.99 | Li_{0.99}N_{0.80}Co_{0.15}Al_{0.05}O₂ | 970 | 91 |
| Ex.4 | 0.995 | Li_{0.995}N_{0.80}Co_{0.15}Al_{0.05}O₂ | 975 | 90 |
| Comp. Ex.1 | 0.9 | Li_{0.9}N_{0.80}Co_{0.15}Al_{0.05}O₂ | 721 | 91 |
| Comp. Ex.2 | 1 | Li_{0.00}N_{0.80}Co_{0.15}Al_{0.05}O₂ | 980 | 73 |
| Comp. Ex.2 | 1.02 | Li_{0.02}N_{0.80}Co_{0.15}Al_{0.05}O₂ | 979 | 70 |

As may be seen from Table 1 that, in the Comparative Example 1 containing the lithium nickel composite oxide where a is less than 0.95, the lithium content in the cathode/positive active material is small, the cell is not sufficient in capacity and hence is inappropriate as a utility cell. On the other hand, with the Comparative Examples 2 and 3 containing the lithium nickel composite oxide with a not less than 1, the initial cell capacity is that high, however, the cyclic characteristics of the cells are lowered.

It is also seen from Table 1 that the samples 2 to 5 containing lithium nickel composite oxides where 0.95 ≤ a < 1 are larger in cell capacity and undergo only little cyclic deterioration. It is also seen that the samples 3 to 5 containing lithium nickel composite oxides, with 0.97 ≤ a ≤ 0.995, are superior in cyclic characteristics, with the initial cell capacity exceeding 900 mAh, such that these cells are particularly desirable as utility cells.

Thus, it may be seen that the non-aqueous liquid electrolyte secondary cell, containing a lithium nickel composite oxide as the cathode/positive active material, with *a* being such that 0.95 ≤ *a* < 1, is superior in cyclic characteristics and is of a high capacity.

In Examples 5 to 10, plural cells were prepared as the first element Ma of the lithium manganese containing composite oxide was changed, and high-temperature storage characteristics of the so produced cells were searched. In Examples 11 to 16, plural cells were prepared as the second element Mb of the lithium manganese containing composite oxide was changed and high-temperature storage characteristics and cyclic characteristics of the so produced cells were searched.

### (Examples 5 to 10)

Plural cathodes were prepared in the same way as in Example 1, except preparing a manganese-containing oxide as the first element (Ma) was changed as shown in the Table 2 shown below in the preparation of the lithium-manganese containing composite oxide, and plural non-aqueous liquid electrolyte secondary cells were prepared.

Meanwhile, in preparing the lithiwn-manganese containing composite oxide, cobalt monoxide and dialuminum trioxide (Al₂O₃) were used in Examples 5 and 6, respectively, in place of dichromium trioxide of Example 1, while magnesium monoxide (MgO) and zinc monoxide (ZnO) were used in Examples 7 arid 8, respectively, in place of dichromium trioxide of Example 1. Similarly, tin monoxide (SnO) was used in Example 9, in place of dichromium trioxide of Example 1, while cobalt oxide and dichromium trioxide were used in Example 10 in place of dichromium trioxide of Example 1.

### (Examples 11 to 16)

Plural cathodes were prepared in the same way as in Example 1, except preparing a lithium-nickel containing oxide as the second element (Mb) was changed as shown in the Table 2 shown below in the preparation of the lithium-nickel containing composite oxide, and plural non-aqueous liquid electrolyte secondary cells were prepared.

Meanwhile, in preparing the lithium-nickel containing composite oxide, diiron trioxide (Fe2O3) and dialuminum trioxide were used in Examples 11 and 12, respectively, in place of cobalt hydroxide and trialuminum trioxide of Example 1. Similarly, magnesium oxide and zinc oxide were used in Examples 13 and 14, respectively, in place of cobalt hydroxide and trialuminum trioxide of Example 1. On the other hand, tin monoxide was used in Example 15 and cobalt monoxide and dialuminum trioxide were used in Example 16 in place of cobalt hydroxide and trialuminum trioxide of Example 1.

Of the cells of the Examples 5 to 10, 11 to 16 and the Example 3, prepared as described above, high temperature storage characteristics were scrutinized. As the high temperature storage characteristics, a general discharge capacity upkeep ratio under general discharge conditions on storage at elevated temperatures and the high load discharge energy under high load discharge conditions were found.

Meanwhile, the general discharge capacity upkeep ratio following storage at elevated temperatures was found as follows: First, charging/discharging was carried out in a constant temperature vessel maintained at 23°C to find the initial discharging capacity. It is noted that charging was carried out at a constant current of 1A until the cell voltage reached 4.2V, and subsequently was continued at a constant voltage of 4.2V until the sum total of the discharging time equaled to three hours. The cell was then discharged at a constant current of 0.5A until the terminal voltage (cut-off voltage) of 3.0 V was reached. This was set as the general charging/discharge condition.

The cell then was charged again under this general charging condition and stored for two weeks in an oven maintained at 60°C. The cell then was discharged in a constant temperature vessel of 23°C once to a terminal voltage of 3.0 V. Ten cycles of the charging/discharge then were carried out under the general charging/discharge condition and the value which was maximum during these ten cycles was adopted as the discharge capacity following storage at the elevated temperatures, and the ratio thereof to the initial discharge capacity was adopted as the general discharge capacity upkeep ratio following storage at elevated temperatures.

The cell was stored at 60°C for two weeks and discharged once to a terminal voltage of 3.0V in the constant temperature vessel of 23°C, after which the cell was charged at a constant current of 1.5A to the terminal voltage of 3.0V and subsequently discharged under a high load. From the results of this discharge under a high load, the high load discharge energy following storage at elevated temperatures was found.

As for the charging/discharge cycle characteristics at ambient temperature, 200 cycles of charging/discharge cycle characteristics were carried out under the aforementioned general charging/discharge conditions, in the constant temperature vessel maintained at 23°C, and the ratio of the discharge capacity of the number 200 cycle to the discharge capacity of the number two cycle (capacity upkeep ratio) was found.

The results of evaluation of high temperature storage characteristics and charging/discharge characteristics at ambient temperature and charging/discharge cyclic characteristics at ambient temperature of the cells of Examples 5 to 16 and the Example 3 are shown in Table 2 along with the values of the first element (Ma) of the manganese-containing composite oxide and the values of the second element (Mb) of the lithium nickel composite oxide:

**Table 2**

| | first element Ma | second element Mb | volwne upkeep ratio following storage at elevated temperature (%) | discharge capacity following storage (Wh) | me upkeep ratio following 200 cycles (%) |
|---|---|---|---|---|---|
| Ex.3 | Cr0.15 | Co0.15A10.15 | 90 | 2.98 | 94 |
| Ex.5 | Co0.15 | Co0.15A10.15 | 91 | 2.95 | 95 |
| Ex.6 | Al0.15 | Co0.15A10.15 | 90 | 2.93 | 94 |
| Ex.7 | Mg0.15 | Co0.15A10.15 | 92 | 2.95 | 93 |
| Ex.8 | Zn0.15 | Co0.15A10.15 | 90 | 3 | 94 |
| Ex.9 | Sn0.15 | Co0.15A10.15 | 91 | 2.96 | 93 |
| Ex.10 | Co0.1Cr0.1 | Co0.15A10.15 | 91 | 2.95 | 93 |
| Ex.11 | Cr0.15 | Fe0.20 | 90 | 2.95 | 92 |
| Ex.12 | Cr0.15 | Al0.20 | 92 | 2.97 | 92 |
| Ex.13 | Cr0.15 | Mg0.20 | 92 | 2.97 | 93 |
| Ex.14 | Cr0.15 | Zn0.20 | 91 | 2.97 | 93 |
| Ex.15 | Cr0.15 | Sn0.20 | 90 | 2.96 | 94 |
| Ex.16 | Cr0.15 | Co0.25Al0.05 | 91 | 2.94 | 94 |

As may be seen from Table 2, the general discharge capacity upkeep ratio following storage at elevated temperatures and the high load discharge energy following storage at elevated temperatures were 90% and not less than 90 Wh, which were higher values as in Example 3. In addition, satisfactory results could be obtained for charging/discharge characteristics at ambient temperatures. Specifically, it was seen that superior high temperature storage characteristics as those in Example 3 could be obtained with use of a manganese-containing oxide in which the first element is changed to an element other than chromium or with use of a lithium nickel composite oxide in which the second element is changed to an element other than cobalt.

In Examples 17 to 20 and in Comparative Examples 4 and 5, plural cells were prepared as the mixing ratio of the lithium-manganese containing composite oxide and the lithium-nickel containing composite oxide was varied and the high temperature storage characteristics as well as cyclic characteristics of the so produced cells were evaluated.

Plural cathodes were prepared in the same way as in Example 1 except changing the mixing ratio of the lithium-manganese containing composite oxide and the lithium-nickel containing composite oxide as shown in Table 3, and non-aqueous liquid electrolyte secondary cells were prepared using these cathodes.

Meanwhile, in Example 21, the mixing ratio of the lithium-manganese containing composite oxide was lowered, whereas, in Example 22, the mixing ratio of the lithium-nickel containing composite oxide was lowered.

Of the cells of Examples 17 to 22, produced as described above, the high temperature storage characteristics and charging/discharge characteristics at ambient temperature were searched in the same way as in the above-described evaluation method. The results of the evaluation are shown in Table 3, along with the value of the first element ma of the lithium-manganese containing composite oxide and the value of the second element Mb of the lithium-manganese containing composite oxide:

**Table 3**

| | mixing ratio (weight parts) | | volume upkeep ratio following storage at elevated temperature (%) | discharge capacity following storage (Wh) | volume upkeep ratio following 200 cycles (%) |
|---|---|---|---|---|---|
| | LiMn1.85Cr0.15O4 | Li0.99Ni0.8Co0.15Al0.05O2 | | | |
| Ex.3 | 40 | 60 | 90 | 2.98 | 94 |
| Ex.17 | 20 | 80 | 92 | 2.9 | 92 |
| Ex.18 | 50 | 50 | 90 | 3 | 95 |
| Ex.19 | 60 | 40 | 89 | 3.05 | 93 |
| Ex.20 | 80 | 20 | 88 | 3.1 | 94 |
| Ex.22 | 10 | 90 | 92 | 2.7 | 90 |
| Ex.23 | 90 | 10 | 84 | 2.8 | 90 |

As may be seen from Table 3, the higher the mixing ratio of the lithium-manganese containing composite oxide, the larger is the high load discharge energy following storage at elevated temperature, whereas, the higher the mixing ratio of the lithium-nickel containing composite oxide, the higher is the general discharge capacity upkeep ratio following storage at elevated temperature. In particular, the Examples 3 and 17 to 20 are seen to be excellent both in the discharge capacity upkeep ratio following storage at elevated temperatures and in the high load discharge energy following storage at elevated temperature, which are 88% or higher and 2.90 Wh or higher, respectively.

Conversely, with Example 21 with the low mixing ratio of the lithium-manganese composite oxide, the high load discharge energy following storage at elevated temperature is small, whereas, with Example 22 where the mixing ratio of the lithium-nickel composite oxide is low, the capacity upkeep ratio following storage at elevated temperature was low.

That is, by setting the mixing ratio of the lithium-manganese composite oxide and the lithium-nickel composite oxide so that the content of the lithium-nickel composite oxide is 80 to 20 to the content of the lithium-manganese composite oxide of 20 to 80, particularly excellent high temperature storage characteristics can be achieved. Meanwhile, excellent results could be obtained as to the charging/discharge characteristics at ambient temperatures.

## Claims

1. A cathode/positive active material containing a lithium nickel composite oxide represented by the general formula Li_{A}Ni_{1-z}M_{z}O₂, where A is such that 0.95 ≤ A < 1, Z is such that 0.01 ≤ Z ≤ 0.5 and M is at least one of Fe, Co, Mn, Cu, Zn, Al, Sn, B, Ga, Cr, V, Ti, Mg, Ca and Sr and a lithium manganese composite oxide, wherein said lithium manganese composite oxide is a compound represented by the general formula LixMn_{2-Y}M'_{Y}O₄, where X is such that 0.9 ≤ X, Y is such that 0.01 ≤ Y ≤ 0.5 and M' is at least one of Fe, Co, Ni, Cu, Zn, Al, Sn, Cr, V, Ti, Mg, Ca and Sr.

2. The cathode/positive active material according to claim 1, wherein A of the general formula is such that 0.97 ≤ A ≤ 0.995.

3. The cathode/positive active material according to claim 1, wherein the lithium nickel composite oxide represented by the general formula Li_{A}Ni_{1-Z}M_{Z}O₂ and the lithium manganese composite oxide are mixed at a weight ratio of 20:80 to 80:20.

4. A non-aqueous electrolyte cell including a cathode containing a cathode/positive active material, an anode containing an anode/negative active material and a non-aqueous electrolyte wherein the cathode/positive active material contains a lithium nickel composite oxide represented by the general formula Li_{A}Ni_{1-Z}M_{Z}O₂, where A is such that 0.95 ≤ A < 1, Z is such that 0.01 ≤ Z ≤ 0.5 and M is at least one of Fe, Co, Mn, Cu, Zn, Al, Sn, B, Ga, Cr, V, Ti, Mg, Ca and Sr and a lithium manganese composite oxide, wherein said lithium manganese composite oxide is a compound represented by the general formula Li_{X}Mn_{2-Y}M'_{Y}O₄, where X is such that 0.9 ≤ X, Y is such that 0.01 ≤ Y ≤ 0.5 and M' is at least one of Fe, Co, Ni, Cu, Zn, Al, Sn, Cr, V, Ti, Mg, Ca and Sr.

5. The non-aqueous electrolyte cell according to claim 4, wherein A of the general formula is such that 0.97 ≤ A ≤ 0.995.

6. The non-aqueous electrolyte secondary cell according to claim 4, wherein the lithium nickel composite oxide represented by the general formula Li_{A}Ni_{1-Z}M_{Z}O₂ and the lithium manganese composite oxide are mixed at a weight ratio of 20:80 to 80:20.

7. The non-aqueous electrolyte secondary cell according to claim 4, wherein said anode uses, as an active material, one or more carbonaceous materials capable of doping and undoping lithium and which are selected from the group consisting of pyrocarbon, cokes, graphite, vitreous carbon, sintered organic high molecular or polymer compounds, carbon fibers and activated charcoal.

8. The non-aqueous electrolyte secondary cell according to claim 4, wherein said anode is formed by spherical, flat or fiber-like graphite powders having the spacing of the (002) plane being 0.335 to 0.340 nm and the c-axis spacing Lc being not less than 20 nm.

9. The non-aqueous electrolyte secondary cell according to claim 4, wherein said cathode is fonned by a current collector on each side of which is coated a layer of a mixture containing an active material, said anode is formed by a current collector on each side of which is coated a layer of a mixture containing an active material, said cathode and the anode being laminated together via a separator in-between to form a laminated product which then is spirally wound about itself a number of times to form an electrode unit.

## Patentansprüche

1. Kathoden-/ Positiv-Aktivmaterial, enthaltend ein Lithium-Nickel-Mischoxid, dargestellt durch die allgemeine Formel Li_{A}Ni_{1-Z}M_{Z}O₂, wobei A so ist, dass 0,95 ≤ A < 1 ist, Z so ist, dass 0,01 ≤ Z ≤ 0,5 ist und M mindestens eines darstellt von Fe, Co, Mn, Cu, Zn, Al, Sn, B, Ga, Cr, V, Ti, Mg, Ca und Sr, und ein Lithium-Mangan-Mischoxid, wobei das Lithium-Mangan-Mischoxid eine Verbindung ist, dargestellt durch die allgemeine Formel LiₓMn_{2-Y}M'_{Y}O₄, wobei X so ist, dass 0,9 ≤ X ist, Y so ist, dass 0,01 ≤ Y ≤ 0,5 ist und M' mindestens eines darstellt von Fe, Co, Ni, Cu, Zn, Al, Sn, Cr, V, Ti, Mg, Ca und Sr.

2. Kathoden-/Positiv-Aktivmaterial nach Anspruch 1, wobei A in der allgemeinen Formel so ist, dass 0,97 ≤ A ≤ 0,995 ist.

3. Kathoden-/Positiv-Aktivmaterial nach Anspruch 1, wobei das Lithium-Nickel-Mischoxid, dargestellt durch die allgemeine Formel Li_{A}Ni_{1-Z}M_{Z}O₂, und das Lithium-Mangan-Mischoxid in einem Gewichtsverhältnis von 20:80 bis 80:20 gemischt sind.

4. Zelle mit nicht-wässerigem Elektrolyt, umfassend eine Kathode, enthaltend ein Kathoden-/Positiv-Aktivmaterial, eine Anode, enthaltend ein Anoden-/Negativ-Aktivmaterial und einen nicht-wässerigen Elektrolyten, wobei das Kathoden-/Positiv-Aktivmaterial ein Lithium-Nickel-Mischoxid enthält, dargestellt durch die allgemeine Formel Li_{A}Ni_{1-z}M_{z}O₂, wobei A so ist, dass 0,95 ≤ A < 1 ist, Z so ist, dass 0,01 ≤ Z ≤ 0,5 ist und M mindestens eines darstellt von Fe, Co, Mn, Cu, Zn, Al, Sn, B, Ga, Cr, V, Ti, Mg, Ca und Sr, und ein Lithium-Mangan-Mischoxid, wobei das Lithium-Mangan-Mischoxid eine Verbindung ist, dargestellt durch die allgemeine Formel LiₓMn_{2-Y}M'_{Y}O₄, wobei X so ist, dass 0,9 ≤ X ist, Y so ist, dass 0,01 ≤ Y ≤0,5 ist und M' mindestens eines darstellt von Fe, Co, Ni, Cu, Zn, Al, Sn, Cr, V, Ti, Mg, Ca und Sr.

5. Zelle mit nicht-wässerigem Elektrolyt nach Anspruch 4, wobei A in der allgemeinen Formel so ist, dass 0,97 ≤ A 0,995 ist.

6. Sekundär-Zelle mit nicht-wässerigem Elektrolyt nach Anspruch 4, wobei das Lithium-Nickel-Mischoxid, dargestellt durch die allgemeine Formel Li_{A}Ni_{1-Z}M_{Z}O₂, und das Lithium-Mangan-Mischoxid in einem Gewichtsverhältnis von 20:80 bis 80:20 gemischt sind.

7. Sekundär-Zelle mit nicht-wässerigem Elektrolyt nach Anspruch 4, wobei die Anode als Aktivmaterial ein oder mehrere Kohlenstoffmaterialien verwendet, die in der Lage sind, mit Lithium dotiert und entdotiert zu werden, und die ausgewählt sind aus der Gruppe, bestehend aus Pyrokohlenstoff, Koks, Graphit, glasförmigem Kohlenstoff, gesinterten organischen hochmolekularen oder polymeren Verbindungen, Kohlenstofffasern und Aktivkohle.

8. Sekundär-Zelle mit nicht-wässerigem Elektrolyt nach Anspruch 4, wobei die Anode durch sphärische, flache oder faserartige Graphitpulver mit einem Abstand der (002)-Ebene von 0,335 bis 0,340 nm und dem c-Achsenabstand Lc von nicht weniger als 20 nm gebildet ist.

9. Sekundär-Zelle mit nicht-wässerigem Elektrolyt nach Anspruch 4, wobei die Kathode durch einen Stromkollektor gebildet ist, der auf jeder Seite mit einer Schicht einer Mischung beschichtet ist, die ein Aktivmaterial enthält, wobei die Anode durch einen Stromkollektor gebildet ist, der auf jeder Seite mit einer Schicht einer Mischung beschichtet ist, die ein Aktivmaterial enthält, wobei die Kathode und die Anode zusammen laminiert sind mit einem Separator dazwischen, um ein laminiertes Produkt zu bilden, welches dann eine Anzahl von Malen spiralförmig um sich selbst aufgewickelt ist, um eine Elektrodeneinheit zu bilden.

## Revendications

1. Cathode/matière active positive contenant un oxyde composite de lithium et de nickel représenté par la formule générale Li_{A}Ni₁-_{Z}M_{Z}O₂, dans laquelle A est tel que 0,95 ≤ A < 1, Z est tel que 0,01 ≤ Z ≤ 0,5 et M est au moins un parmi Fe, Co, Mn, Cu, Zn, AI, Sn, B, Ga, Cr, V, Ti, Mg, Ca et Sr et un oxyde composite de lithium et de manganèse, dans laquelle ledit oxyde composite de lithium et de manganèse est un composé représenté par la formule générale LiₓMn_{2-Y}M'_{y}O₄, dans laquelle X est tel que 0,9 ≤ X, Y est tel que 0,01 ≤ Y ≤ 0,5 et M' est au moins un parmi Fe, Co, Ni, Cu, Zn, AI, Sn, Cr, V, Ti, Mg, Ca et Sr.

2. Cathode/matière active selon la revendication 1, dans laquelle A de la formule générale est tel que 0,97 ≤ A ≤ 0,995.

3. Cathode/matière active selon la revendication 1, dans laquelle l'oxyde composite de lithium et de nickel représenté par la formule générale Li_{A}Ni_{1-Z}M_{Z}O₂ et l'oxyde composite de lithium et de manganèse sont mélangés selon un rapport massique de 20:80 à 80:20.

4. Pile à électrolyte non aqueux comprenant une cathode contenant une cathode/matière active positive, une anode contenant une anode/matière active négative et un électrolyte non aqueux dans laquelle la cathode/matière active positive contient un oxyde composite de lithium et de nickel représenté par la formule générale Li_{A}Ni_{1-Z}M_{Z}O₂, dans laquelle A est tel que 0,95 ≤ A < 1, Z est tel que 0,01 ≤ Z ≤0,5 et M est au moins un choisi parmi Fe, Co, Mn, Cu, Zn, Al, Sn, B, Ga, Cr, V, Ti, Mg, Ca et Sr et un oxyde composite de lithium et de manganèse, dans laquelle ledit oxyde composite de lithium et de manganèse est un composé représenté par la formule générale LiₓNn_{2-Y}M'_{Y}O₄, dans laquelle X est tel que 0,9 ≤ X, Y est tel que 0,01 ≤ Y ≤ 0,5 et M' est au moins un parmi Fe, Co, Ni, Cu, Zn, Al, Sn, Cr, V, Ti, Mg, Ca et Sr.

5. Pile à électrolyte non aqueux selon la revendication 4, dans laquelle A de la formule générale est tel que 0,97 ≤ A ≤ 0,995.

6. Pile secondaire à électrolyte non aqueux selon la revendication 4, dans laquelle l'oxyde composite de lithium et de nickel représenté par la formule générale Li_{A}Ni_{1-Z}M_{Z}O₂ et l'oxyde composite de lithium et de manganèse sont mélangés selon un rapport massique de 20:80 à 80:20.

7. Pile secondaire à électrolyte non aqueux selon la revendication 4, dans laquelle ladite anode utilise, comme matière active un ou plusieurs matériaux carbonés capables de doper et de dédoper le lithium et lesquels sont choisis dans le groupe constitué de pyrocarbone, de cokes, de graphite, de carbone vitreux, de composés frittés organiques de poids moléculaire élevé ou polymères, de fibres de carbone et de charbon actif.

8. Pile secondaire à électrolyte non aqueux selon la revendication 4, dans laquelle ladite anode est formée par des poudres de graphite sphérique, plan ou en forme de fibre présentant l'espacement du plan (002) de 0,335 à 0,340 nm et l'espacement "Lc" de l'axe "axe-c" étant d'au moins 20 nm.

9. Pile secondaire à électrolyte non aqueux selon la revendication 4, dans laquelle ladite cathode est formée par un collecteur de courant sur chaque côté duquel est déposée une couche d'un mélange contenant une matière active, ladite anode est formée par un collecteur de courant sur chaque côté duquel est déposé une couche d'un mélange contenant une matière active, ladite cathode et l'anode étant strastifiées ensemble via un séparateur entre celles-ci pour former un produit stratifié qui est ensuite enroulé en spirale autour de lui-même un certain nombre de fois pour former une unité d'électrode.
